# EUROPÄISCHE PATENTSCHRIFT

(11) **EP 3 180 199 B1**
(45) Veröffentlichungstag und Bekanntmachung des Hinweises auf die Patenterteilung: **30.06.2021**
(21) Anmeldenummer: 15750387.1
(22) Anmeldetag: 10.08.2015
(51) Int. Cl.: B60B 3/14, B60B 3/16, B60B 23/12

(54) **SPURVERBREITERUNGSSYSTEM FÜR KRAFTFAHRZEUGE**
WHEEL SPACER SYSTEM FOR MOTOR VEHICLES
SYSTÈME D'ÉLARGISSEMENT DE LA VOIE POUR VÉHICULES AUTOMOBILES

(30) Priorität: 12.08.2014 DE 102014215986; 19.01.2015 DE 202015000487 U
(43) Veröffentlichungstag der Anmeldung: 21.06.2017
(73) Patentinhaber: Wohlfarth, Klaus, 74427 Fichtenberg (DE)
(72) Erfinder: WEIDNER, Andreas, 74427 Fichtenberg (DE); SIMONJAN, Edgar, 74741 Vellberg (DE)
(74) Vertreter: Patentanwälte Ruff, Wilhelm, Beier, Dauster & Partner mbB
(86) Internationale Anmeldenummer: PCT/EP2015/068329
(87) Internationale Veröffentlichungsnummer: WO 2016/023848

(56) Entgegenhaltungen:
- EP-A1- 0 607 417
- WO-A1-2014/048551
- DE-A1- 19 936 225
- DE-U1- 9 402 438
- DE-U1- 29 915 048

## Beschreibung

Die Erfindung betrifft ein Spurverbreiterungssystem für Kraftfahrzeuge mit wenigstens einer Spurverbreiterungsscheibe.

Mit der Erfindung soll ein Spurverbreiterungssystem für Kraftfahrzeuge bereitgestellt werden, das für unterschiedliche Felgen und unterschiedliche Fahrzeuge flexibel einsetzbar ist. Ein entsprechendes Spurverbreiterungssystem ist aus Dokument DE 199 36 225 A1 bekannt.

Erfindungsgemäß ist hierzu ein Spurverbreiterungssystem für Kraftfahrzeuge mit den Merkmalen von Anspruch 1 oder Anspruch 8 vorgesehen. Zweckmäßige Weiterbildungen sind in den Unteransprüchen angegeben. Wenigstens eine Spurverbreiterungsscheibe und eine in eine Mittelöffnung der Spurverbreiterungsscheibe eingesetzten Zentrierring sind vorgesehen, wobei der Zentrierring aus Kunststoff besteht. Insbesondere weist der Zentrierring wenigstens eine, am freien Ende eines federnden Armes angeordnete erste Rasteinrichtung auf und die Spurverbreiterungsscheibe weist eine passende zweite Rasteinrichtung auf.

Durch Vorsehen einer Spurverbreiterungsscheibe und eines hiervon getrennten Zentrierrings kann das Spurverbreiterungssystem flexibel auf unterschiedliche Fahrzeuge und unterschiedliche Felgen angepasst werden. Denn die Spurverbreiterungsscheibe muss auf die Radschrauben des Fahrzeugs passen und der Zentrierring muss wiederum auf den Durchmesser einer Mittelöffnung in der Felge abgestimmt sein, so dass die Felge beim Aufsetzen auf den Zentrierring exakt konzentrisch zur Spurverbreitungsscheibe bzw. konzentrisch zur Radnabe bzw. dem Lochkreis mit den Radschrauben ausgerichtet ist und problemlos montiert werden kann. Der Erfindung liegt dabei die Erkenntnis zugrunde, dass der Zentrierring im Fahrbetrieb nicht belastet wird, da die durch die Felge in die Radnabe und umgekehrt eingeleiteten Kräfte und Momente ausschließlich mittels der Spurverbreiterungsscheibe übertragen werden. Überraschenderweise ist es daher möglich, den Zentrierring, der lediglich beim Montieren der Spurverbreiterungsscheibe und beim Montieren der Felge seine Zentrierfunktion erfüllt, aus Kunststoff herzustellen. Dadurch kann der Zentrierring aber sehr kostengünstig und auch in verschiedensten Abmessungen hergestellt werden, um das erfindungsgemäße Spurverbreiterungssystem für unterschiedliche Fahrzeuge und Felgen einsetzen zu können. Der Zentrierring kann beispielsweise als Kunststoffspritzgussteil, speziell faserverstärkter Kunststoff, ausgebildet sein, da er ja, wie erwähnt wurde, im Fahrbetrieb keinerlei Belastungen ausgesetzt ist. Die Herstellung des Zentrierrings aus Kunststoff, insbesondere aus Kunststoffspritzguss, erleichtert auch die Herstellung unterschiedlicher Zentrierringe, die dann für die Anpassung der Spurverbreiterungsscheiben auf unterschiedliche Felgen sorgen.

Indem der Felgenzentrierabschnitt an dem Zentrierring, mit dem also die Mittenbohrung der Felge auf dem Zentrierring zentriert wird, leicht konisch ist, können Toleranzen bei den Mittenbohrungen der Felge ausgeglichen werden. Der Felgenzentrierabschnitt verjüngt sich zu seinem freien Ende hin, so dass also eine Felge leicht aufgeschoben werden kann. Je weiter die Felge dann auf den Felgenzentrierabschnitt des Zentrierrings aufgeschoben wird, desto größer wird der Durchmesser des Feigenzentrierabschnitts. Dadurch kann ein Spiel zwischen der Mittenbohrung der Felge und dem Felgenzentrierabschnitt völlig vermieden werden. Es kann dadurch sichergestellt werden, dass, unabhängig von Toleranzen der Mittenbohrung der Felge, die Mittenbohrung der Felge immer spielfrei auf dem Felgenzentrierabschnitt des Zentrierrings aufsitzt. Eine Durchmesserveränderung des Felgenzentrierabschnitts ist dabei sehr klein und bewegt sich in einem Bereich von wenigen Zehntelmillimeter. Dies genügt aber zum Ausgleich von Toleranzen, die bei Mittenbohrungen von Felgen, insbesondere Aluminiumfelgen, auftreten.

In Weiterbildung der Erfindung ist die erste Rasteinrichtung als in radialer Richtung nach außen vorragende Rastnase ausgebildet. Die Rastnase befindet sich somit am freien Ende eines federnden Arms, der an einem Kunststoffteil, insbesondere einem Kunststoffspritzgussteil, insbesondere aus faserverstärktem Kunststoff, problemlos zu realisieren ist. Wiederum ist hier die Erkenntnis wesentlich, dass der Zentrierring im Fahrbetrieb keinerlei Belastungen unterworfen ist und somit die Rastnase am freien Ende eines federnden Arms lediglich die Kräfte auffangen muss, die beim Montieren der Spurverbreiterungsscheibe und der Felge auf der Radnabe auftreten. Zweckmäßigerweise sind an dem Zentrierring mehrere, insbesondere vier, federnde Arme mit Rastnasen an den freien Enden vorgesehen.

In Weiterbildung der Erfindung ist die zweite Rasteinrichtung mittels eines um die Mittelöffnung umlaufenden Absatzes, einer um die Mittelöffnung umlaufenden Abschrägung oder einer um die Mittelöffnung umlaufenden Nut ausgebildet.

Ein umlaufender Absatz, eine umlaufende Abschrägung oder eine umlaufende Nut können in der Spurverbreiterungsscheibe problemlos vorgesehen werden, da diese üblicherweise aus Metall besteht und ohnehin mechanisch bearbeitet werden muss. Der umlaufende Absatz, die umlaufende Abschrägung oder die umlaufende Nut können daher beispielsweise in die Spurverbreiterungsscheibe bei einem Drehprozess eingearbeitet werden. Die nach außen vorragenden Rastnasen am Zentrierring schnappen dann selbsttätig beim Einschieben des Zentrierrings in die Mittelöffnung der Spurverbreiterungsscheibe ein. Bei dicken Spurverbreiterungsscheiben kann dabei in der Innenwand der Mittelöffnung eine Nut vorgesehen sein, bei dünneren Spurverbreiterungsscheiben können die Rastnasen des Zentrierrings an einen umlaufenden Absatz oder eine umlaufende Abschrägung eingreifen, die am Übergang zwischen der Mittelöffnung und der Oberseite und/oder Unterseite der Spurverbreiterungsscheibe angeordnet ist.

In Weiterbildung der Erfindung weist die Spurverbreiterungsscheibe wenigstens ein sich in Umfangsrichtung erstreckendes, gekrümmtes Langloch als Radschraubenloch auf.

Auf diese Weise können mit einer Spurverbreiterungsscheibe unterschiedliche Lochbilder abgedeckt werden. Auch auf diese Weise kann die Anzahl der für das erfindungsgemäße Spurverbreiterungssystem erforderlichen Einzelteile, um unterschiedliche Fahrzeuge und Felgen abzudecken, deutlich verringert werden.

In Weiterbildung der Erfindung weist die Spurverbreiterungsscheibe mehrere, für das Durchstecken von Radschrauben vorgesehene Radschraubenlöcher auf, wobei eine Abmessung der Radschraubenlöcher in radialer Richtung der Spurverbreiterungsscheibe das 1,2-Fache bis 1,7-Fache, insbesondere das 1,5-Fache des Durchmessers der Radschrauben beträgt.

Mittels einer solchen Ausbildung der Radschraubenlöcher in der Spurverbreiterungsscheibe können unterschiedliche Lochkreise an unterschiedlichen Fahrzeugen abgedeckt werden. Auch hierdurch lässt sich die Anzahl der unterschiedlichen Spurverbreiterungsscheiben, die für unterschiedliche Fahrzeuge erforderlich sind, deutlich verringern.

In Weiterbildung der Erfindung sind bei dem erfindungsgemäßen Spurverbreiterungssystem mehrere, voneinander verschiedene Zentrierringe vorgesehen, wobei jeder Zentrierring einen Halteabschnitt zum Festlegen an der Spurverbreiterungsscheibe mit wenigstens einer ersten Rasteinrichtung und einen Felgenzentrierabschnitt zum Anordnen in einer Mittelöffnung einer Felge aufweist, wobei alle Zentrierringe denselben Außendurchmesser im Halteabschnitt aufweisen und sich die Zentrierringe wenigstens teilweise im Außendurchmesser des Felgenzentrierabschnitts unterscheiden.

Auf diese Weise kann sichergestellt werden, dass alle voneinander verschiedenen Zentrierringe in alle Spurverbreiterungsscheiben des erfindungsgemäßen Spurverbreiterungssystems passen und dort verrastet werden können. Wie bereits beschrieben wurde, sind die passenden zweiten Rasteinrichtungen an voneinander verschiedenen Spurverbreiterungsscheiben ebenfalls immer gleich angeordnet, so dass alle Zentrierringe eingerastet werden können.

In Weiterbildung der Erfindung sind Spurverbreiterungsscheiben unterschiedlicher Dicke vorgesehen.

In Weiterbildung der Erfindung sind Spurverbreiterungsscheiben mit unterschiedlich angeordneten Radschraubenlöchern vorgesehen.

Obwohl somit das erfindungsgemäße Spurverbreiterungssystem, um unterschiedliche Fahrzeuge und Felgen abdecken zu können, durchaus unterschiedliche Spurverbreiterungsscheiben und unterschiedliche Zentrierringe erfordert, kann doch die erforderliche Anzahl an Einzelteilen, speziell die Anzahl an unterschiedlichen Spurverbreiterungsscheiben, deutlich reduziert werden. Unterschiedliche Spurverbreiterungsscheiben sind beispielsweise alleine deshalb erforderlich, um unterschiedliche Abmessungen bei der erzielten Spurverbreiterung zu realisieren.

In Weiterbildung der Erfindung weisen unterschiedliche Zentrierringe eine unterschiedliche Farbe auf.

Auf diese Weise können zum einen unterschiedliche Zentrierringe nicht miteinander verwechselt werden, da sie eine unterschiedliche Farbe aufweisen. Zum anderen können die Farben aber auch so gewählt werden, dass Zentrierringe, die denselben Durchmesser des Felgenzentrierabschnitts haben, eine zwar unterschiedliche, aber ähnliche Farbe aufweisen, beispielsweise Farben aus derselben Farbgruppe, beispielsweise unterschiedliche Rottöne. Alleine durch optische Unterscheidung kann damit sofort festgestellt werden, welche Zentrierringe für ein bestimmtes Fahrzeug überhaupt geeignet sind. Denn unterschiedliche Zentrierringe, die für dasselbe Fahrzeug geeignet sind, müssen denselben Durchmesser des Felgenzentrierabschnitts haben, um auf die Radnabe dieses Fahrzeugs aufgeschoben zu werden. Beispielsweise kann dann also zwischen unterschiedlichen Zentrierringen, die alle in Rottönen eingefärbt sind, ausgewählt werden und je nach der gewählten Farbe ermöglichen die Zentrierringe dann das Anordnen einer dickeren oder dünneren Spurverbreiterungsscheibe. Neben Rottönen können beispielsweise auch Gelb-/Orangetöne oder auch Weißtöne verwendet werden. Ein solches Farbkennzeichnungssystem ist gemäß der Erfindung äußerst vorteilhaft und ist im Übrigen auch unabhängig vom Vorsehen von Rastmitteln, also den Rastnasen an den Rastarmen, und kann somit auch an Zentrierringen ohne Rastmittel realisiert werden.

In Weiterbildung der Erfindung ist ein Radnabenzentrierabschnitt an dem Zentrierring leicht konisch.

Auch der Radnabenzentrierabschnitt der Zentrierringe kann leicht konisch ausgebildet sein. Dadurch können Toleranzen der Radnabe, auf die der Radnabenzentrierabschnitt des Zentrierrings hier aufgeschoben werden muss, ausgeglichen werden. Durch die leicht konische Form des Radnabenzentrierabschnitts des Zentrierrings kann damit sichergestellt werden, dass der Zentrierring immer spielfrei auf der Radnabe aufsitzt. Der größte Durchmesser des Radnabenzentrierabschnitts ist dabei an dem Ende des Zentrierrings angeordnet, das zuerst auf die Radnabe aufgeschoben wird und je weiter der Zentrierring dann auf die Radnabe aufgeschoben wird, desto kleiner wird der Durchmesser des Radnabenzentrierabschnitts. Die Verringerung des Radnabenzentrierabschnitts über seine Länge gesehen bewegt sich dabei im Rahmen von wenigen Zehntelmillimeter. Dies genügt aber, um eventuelle Toleranzen der Radnaben zwischen unterschiedlichen Fahrzeugen beziehungsweise unterschiedlichen Radnaben eines Fahrzeugs ausgleichen zu können.

Darüber hinaus ermöglicht die leicht konische Formgebung sowohl des Felgenzentrierabschnitts als auch des Radnabenzentrierabschnitts der erfindungsgemäßen Zentrierringe die leichte Entformung der Zentrierringe nach deren Herstellung durch Kunststoffspritzgießen.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale von unterschiedlichen, in den Zeichnungen dargestellten und/oder beschriebenen Ausführungsformen können dabei in beliebiger Weise miteinander kombiniert werden, ohne den Rahmen der Erfindung zu überschreiten. In den Zeichnungen zeigen:
- Fig. 1: eine Spurverbreiterungsscheibe mit einem ersten Zentrierring von schräg hinten,
- Fig. 2: eine Schnittansicht der Spurverbreiterungsscheibe der Fig. 1,
- Fig. 3: eine Ansicht der Spurverbreiterungsscheibe der Fig. 1 von schräg vorne,
- Fig. 4: eine Ansicht der Spurverbreiterungsscheibe der Fig. 1 mit einem unterschiedlichen Zentrierring,
- Fig. 5: eine Schnittansicht der Spurverbreiterungsscheibe der Fig. 4,
- Fig. 6: eine Ansicht der Spurverbreiterungsscheibe der Fig. 4 von schräg vorne,
- Fig. 7: die Spurverbreiterungsscheibe der Fig. 1 mit einem weiteren Zentrierring,
- Fig. 8: eine Schnittansicht der Spurverbreiterungsscheibe der Fig. 7,
- Fig. 9: eine Ansicht der Spurverbreiterungsscheibe der Fig. 7 von schräg vorne,
- Fig. 10: eine Draufsicht auf eine Spurverbreiterungsscheibe des erfindungsgemäßen Spurverbreiterungssystems,
- Fig. 11: eine Ansicht auf die Schnittebene XI-XI in Fig. 10,
- Fig. 12: eine Seitenansicht eines Zentrierrings des erfindungsgemäßen Spurverbreiterungssystems,
- Fig. 13: eine Ansicht des Zentrierrings der Fig. 12 von vorne,
- Fig. 14: eine Ansicht entlang der Schnittlinie A-A in Fig. 13 einschließlich zweier vergrößerter Detaildarstellungen,
- Fig. 15: eine Ansicht des Zentrierrings der Fig. 12 von hinten,
- Fig. 16: eine Ansicht verschiedener Spurverbreiterungsscheiben und verschiedener Zentrierringe des erfindungsgemäßen Spurverbreiterungssystems und
- Fig. 17 bis 22: jeweils zwei Ansichten eines Zentrierrings des erfindungsgemäßen Spurverbreiterungssystems von schräg vorne und von schräg hinten, und
- Fig. 23: eine schematische Schnittansicht eines Zentrierrings des erfindungsgemäßen Spurverbreiterungssystems.

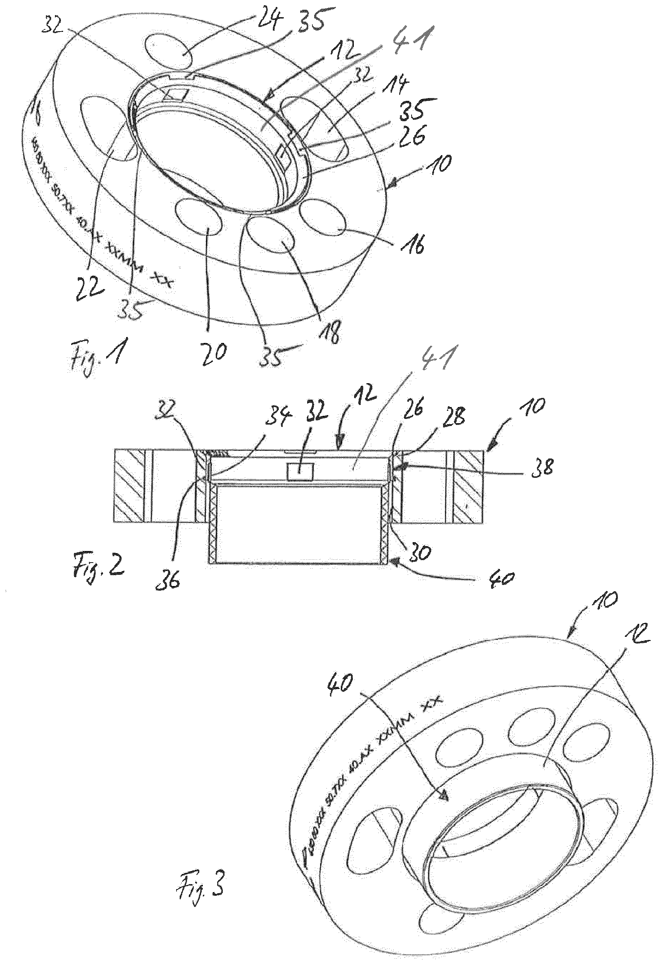

In Fig. 1 ist eine Spurverbreiterungsscheibe 10 mit einem Zentrierring 12 des erfindungsgemäßen Spurverbreiterungssystems dargestellt. Die Spurverbreiterungsscheibe 10 weist insgesamt sechs Radschraubenlöcher 14, 16, 18, 20, 22 und 24 auf. Die Radschraubenlöcher 16, 18, 20 und 24 sind als kreisrunde Bohrungen ausgeführt, die Radschraubenlöcher 14 und 22 hingegen als sich in Umfangsrichtung der Spurverbreiterungsscheibe 10 erstreckende Langlöcher. Üblicherweise sind Radnaben von Kraftfahrzeugen mit vier oder fünf Radschrauben versehen. Die Radschraubenlöcher 14 bis 24 werden infolgedessen nicht alle gleichzeitig für das Durchstecken von Radschrauben verwendet, sondern sind in einer Weise angeordnet, dass unterschiedliche Lochbilder von Radnaben mit einer einzigen Spurverbreiterungsscheibe 10 abgedeckt werden können. Hierzu dienen auch die beiden bogenförmig gekrümmten Langlöcher 14, 22. Darüber hinaus ist der Durchmesser der kreisrunden Radschraubenlöcher 16, 18, 20, 24 sowie die in radialer Richtung gesehene Abmessung der Radschraubenlöcher 14, 22 1,5-mal so groß wie der Außendurchmesser der verwendeten Radschrauben. Dadurch können geringfügig unterschiedliche Lochkreisdurchmesser von Radschrauben an verschiedenen Fahrzeugen abgedeckt werden.

Der Zentrierring 12 ist von der in Fig. 1 sichtbaren Rückseite der Spurverbreiterungsscheibe 10 her in diese eingesetzt und weist einen umlaufenden, abgeschrägten Bund 26 auf, der eine Endposition des Zentrierrings 12 an der Spurverbreiterungsscheibe 10 in axialer Richtung definiert. Das Anschlagen des Bunds 26 an eine passende Abschrägung 28 am Übergang der in Fig. 2 obenliegenden Rückseite der Spurverbreiterungsscheibe 10 in deren Mittelbohrung 30 ist in der Schnittansicht der Fig. 2 gut zu erkennen.

Der Zentrierring 12 weist insgesamt vier federnde Arme 32 auf, an deren freiem Ende jeweils eine Rastnase 34 angeordnet ist. In der Darstellung der Fig. 1 sind nur zwei federnde Arme 32 und zugehörige Rastnasen 34 zu erkennen. Die Rastnasen 3 schnappen in eine Nut 36 ein, die sich ausgehend von der Mittelöffnung der Spurverbreiterungsscheibe 10 radial nach außen erstreckt. Der Zentrierring 12 kann damit in einfacher Weise in die Spurverbreiterungsscheibe 10 eingesetzt werden, indem der Zentrierring 12 in der Fig. 2 von oben her in die Spurverbreiterungsscheibe 10 eingeschoben wird, bis der abgeschrägte Bund 26 an der Abschrägung 28 der Spurverbreiterungsscheibe 10 anliegt und gleichzeitig die Rastnasen 34 in die umlaufende Nut 36 einschnappen. Die Rastnasen 34 können aus der Nut 36 gelöst werden, in dem ein Werkzeug, beispielsweise ein Schraubendreher, in die Ausnehmungen 35 des Zentrierrings 12 gesteckt wird. Die Rastnasen 34 können aber auch werkzeuglos, durch kräftigen Druck auf den Zentrierring 12, gelöst werden.

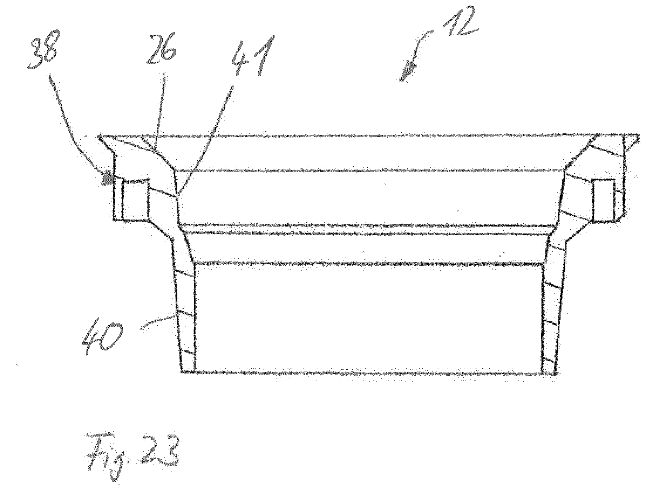

Der Zentrierring 12 weist einen Halteabschnitt 38 auf, dessen Außendurchmesser nur geringfügig kleiner ist als der Innendurchmesser der Mittelöffnung der Spurverbreiterungsscheibe 10. Mit diesem Halteabschnitt 38 wird der Zentrierring 12 in der Mittelöffnung der Spurverbreiterungsscheibe 10 gehalten und in Bezug auf die Mittelöffnung zentriert. Der Zentrierring 12 weist darüber hinaus einen Felgenzentrierabschnitt 40 auf, der über die in Fig. 2 unten angeordnete Vorderseite der Spurverbreiterungsscheibe 10 hinausragt und dafür vorgesehen ist, in die Mittelöffnung einer Felge eingeschoben zu werden. Der Außendurchmesser des kreiszylindrischen Felgenzentrierabschnitts 40 entspricht somit dem Durchmesser der Mittelöffnung der für die Montage vorgesehenen Felge bzw. ist nur geringfügig kleiner als der Durchmesser dieser Mittelöffnung. Der Innendurchmesser des Halteabschnitts 38, der einen Radnabenzentrierabschnitt 41 bildet, entspricht dem Außendurchmesser des Felgenzentrierabschnitts 40. Der Felgenzentrierabschnitt 40 kann leicht konisch ausgebildet sein, was im Zusammenhang mit Fig. 23 detailliert erläutert wird.

Der Zentrierring 12 weist weiter den Radnabenzentrierabschnitt 41 auf, der dafür vorgesehen ist, auf dem Außendurchmesser einer Radnabe platziert zu werden. Durch einfaches Aufschieben des Radnabenzentrierabschnitts 41 auf die Radnabe werden der Zentrierring 12 und die Spurverbreiterungsscheibe 10 automatisch auf der Radnabe zentriert. Gemäß der Erfindung werden Zentrierringe 12 mit unterschiedlichem Innendurchmesser des Radnabenzentrierabschnitts 41 bereitgestellt, um mit unterschiedlichen Fahrzeugtypen, die dann unterschiedliche Außendurchmesser der Radnabe haben, verwendet zu werden. Der Radnabenzentrierabschnitt 41 kann leicht konisch ausgebildet sein, was im Zusammenhang mit Fig. 23 detailliert erläutert wird.

Bereits anhand der Fig. 1 und Fig. 2 ist zu erkennen, dass bei dem erfindungsgemäßen Spurverbreiterungssystem unterschiedliche Zentrierringe 12 in die Spurverbreiterungsscheibe 10 eingesetzt werden können, um Felgen mit unterschiedlichen Durchmessern ihrer Mittelöffnungen relativ zur Spurverbreiterungsscheibe 10 zentrieren zu können. Darüber hinaus ist zu erkennen, dass die Spurverbreiterungsscheibe 10 für unterschiedliche Lochkreise und unterschiedliche Lochbilder von Radnaben von Fahrzeugen eingesetzt werden kann. Das erfindungsgemäße Spurverbreiterungssystem ermöglicht es somit, mit wesentlich weniger Einzelteilen als bei konventionellen Spurverbreiterungsscheiben auszukommen und dennoch eine große Anzahl unterschiedlicher Fahrzeuge und unterschiedlicher Felgen abdecken zu können.

Die Darstellung der Fig. 3 zeigt die Spurverbreiterungsscheibe 10 mit dem eingesetzten Zentrierring 12 von schräg vorne. Wie zu erkennen ist, ragt der Felgenzentrierabschnitt 40 des Zentrierrings 12 über die Vorderseite der Spurverbreiterungsscheibe 10 hinaus und kann dadurch in die Mittelöffnung einer Felge eingeschoben werden.

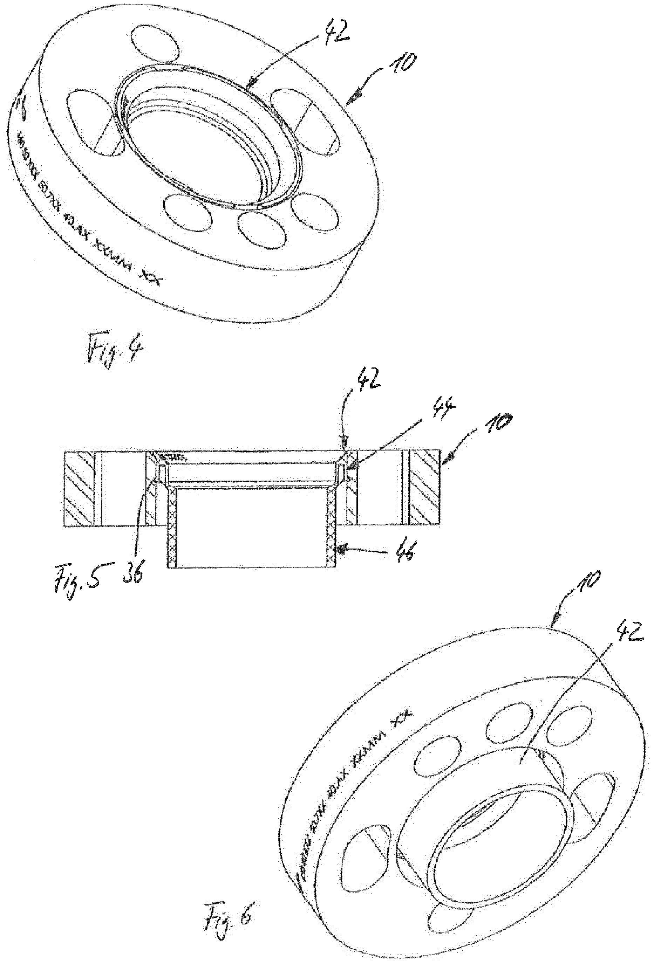

Die Darstellung der Fig. 4 zeigt die Spurverbreiterungsscheibe 10, die bereits in Fig. 1 dargestellt wurde, wobei ein anderer Zentrierring 42 in die Spurverbreiterungsscheibe 10 eingesetzt wurde. Dieser Zentrierring 42 weist einen Halteabschnitt 44 mit dem gleichen Außendurchmesser auf wie der Zentrierring 12. Auch der Zentrierring 42 kann daher in die Mittelöffnung der Spurverbreiterungsscheibe 10 eingesetzt werden und, wie der Zentrierring 12, mittels Rastnasen in der Nut 36 der Spurverbreiterungsscheibe 10 eingerastet werden.

Im Unterschied zum Zentrierring 12 weist der Zentrierring 42 einen Felgenzentrierabschnitt 40 mit gegenüber dem Felgenzentrierabschnitt 40 des Zentrierrings 12 geringerem Außendurchmesser auf.

Durch Einsetzen des Zentrierrings 42 anstelle des Zentrierrings 12 in die Spurverbreiterungsscheibe 10 kann die Spurverbreiterungsscheibe 10 somit auf Felgen mit kleinerem Durchmesser der Mittelöffnung angepasst werden.

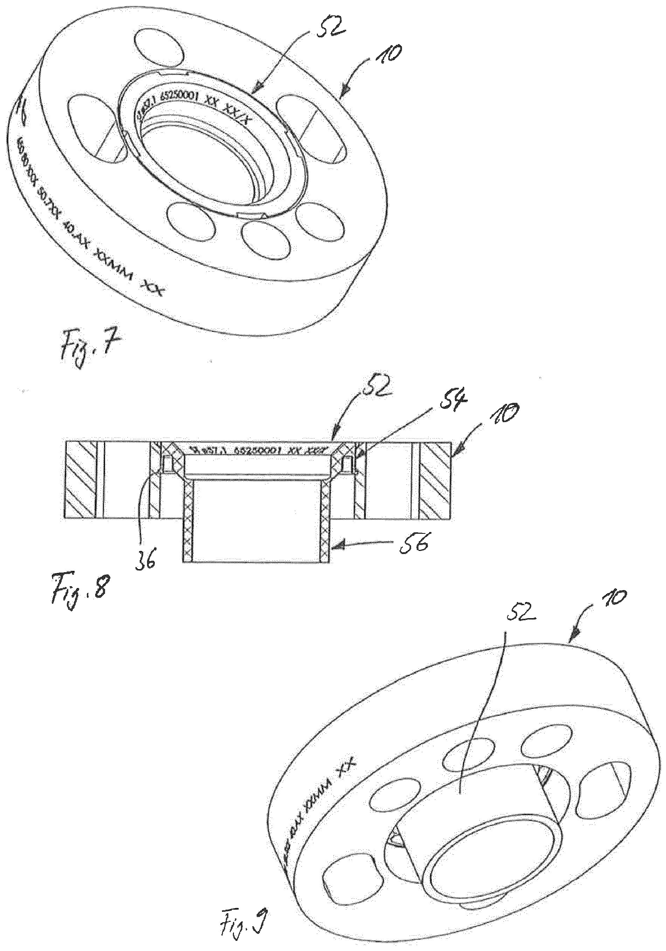

Die Darstellung der Fig. 7 bis 9 zeigen die Spurverbreiterungsscheibe 10 der Fig. 1, wobei anstelle des Zentrierrings 12 ein anderer Zentrierring 52 in die Mittelöffnung der Spurverbreiterungsscheibe 10 eingesetzt wurde. Auch der Zentrierring 52 weist, siehe die Schnittansicht der Fig. 8, einen Halteabschnitt 54 auf, der den gleichen Außendurchmesser wie der Halteabschnitt 38 des Zentrierrings 12, siehe Fig. 2, und der Halteabschnitt 44 des Zentrierrings 42, siehe Fig. 5, aufweist. Auch der Zentrierring 52 kann somit in die Mittelöffnung der Spurverbreiterungsscheibe 10 eingesetzt werden und mittels der Rastnasen an den Rastarmen in der Nut 36 der Spurverbreiterungsscheibe 10 verrastet werden.

Im Unterschied zu den Zentrierringen 12, 42 weist der Zentrierring 52 einen Felgenzentrierabschnitt 56 mit noch geringerem Außendurchmesser auf. Durch Einsetzen des Zentrierrings 52 kann die Spurverbreiterungsscheibe 10 somit für Felgen mit noch geringerem Durchmesser der Mittelöffnung verwendet werden.

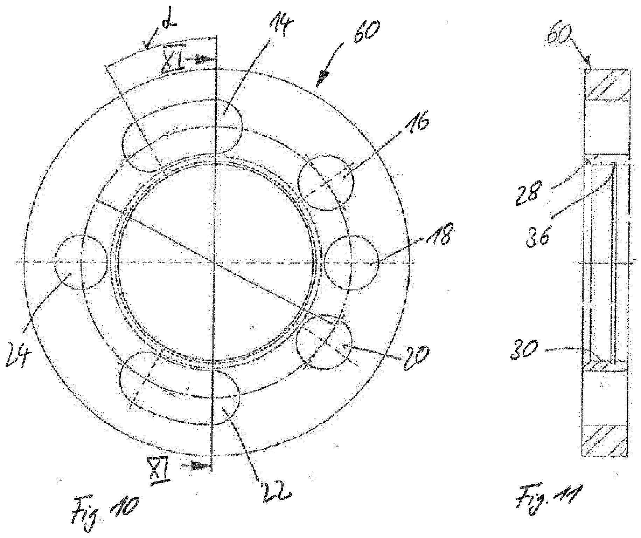

Die Darstellung der Fig. 10 zeigt eine Draufsicht auf eine weitere erfindungsgemäße Spurverbreiterungsscheibe 60. Die Spurverbreiterungsscheibe 60 weist wie die Spurverbreiterungsscheibe 10 der Fig. 1 insgesamt sechs Radschraubenlöcher 14, 16, 18, 20, 22 und 24 auf. In der Fig. 10 ist gut zu erkennen, dass die beiden bogenförmigen Langlöcher 14, 22 sich über einen Winkelbereich α erstrecken, um Radnaben mit unterschiedlichen Lochbildern abdecken zu können.

Die Darstellung der Fig. 11 zeigt eine Draufsicht auf die Schnittebene XI-XI der Fig. 10. Gut zu erkennen sind die Nut 36 in der Mittelöffnung 30 der Spurverbreiterungsscheibe 10, die für die Rastnasen der Zentrierringe vorgesehen ist. Ebenfalls gut zu erkennen ist die Abschrägung 28 am Übergang der in Fig. 11 links angeordneten Rückseite der Spurverbreiterungsscheibe 60 in die Mittelöffnung. Wie bereits erläutert wurde, dient diese Abschrägung 28 dazu, den ebenfalls abgeschrägten Bund 26 der Zentrierringe aufzunehmen und dadurch einen Anschlag beim Einschieben des Zentrierrings in die Spurverbreiterungsscheibe 60 zu bilden.

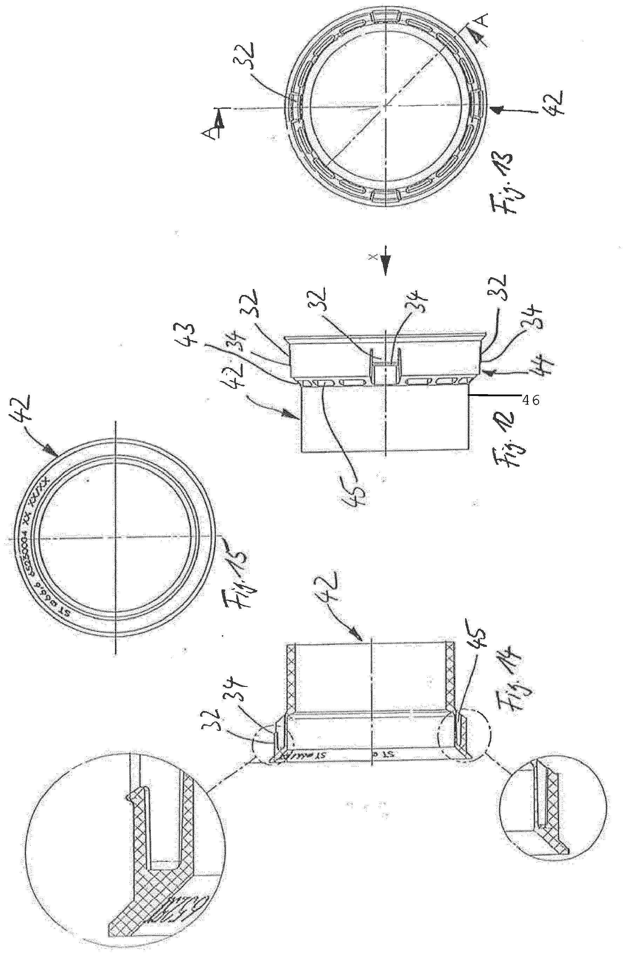

Die Darstellung der Fig. 12 zeigt den Zentrierring 42 der Fig. 5 in einer Seitenansicht. Der Zentrierring 42 weist, wie erläutert wurde, den Halteabschnitt 44 auf, dessen Außendurchmesser an den Innendurchmesser der Mittelöffnung der Spurverbreiterungsscheiben angepasst ist und in dem auch die Rastarme 32 angeordnet sind, an deren freien Enden jeweils Rastnasen 34 angeordnet sind, die sich in Bezug auf den Zentrierring 42 radial nach außen erstrecken. Insgesamt sind über den Umfang des Zentrierrings 42 gesehen vier Rastarme 32 mit jeweils einer Rastnase 34 am freien Ende angeordnet. Am Übergang zwischen dem Halteabschnitt 44 und dem Felgenzentrierabschnitt 46 ist eine kegelstumpfförmige Abschrägung 43 vorgesehen. Diese Abschrägung fällt, je nach dem Durchmesserunterschied zwischen Halteabschnitt 44 und Felgenzentrierabschnitt 46 unterschiedlich aus. In der Schräge 43 sind über den Umfang verteilt mehrere langlochartige Ausnehmungen 45 vorgesehen. Diese Ausnehmungen 45 dienen dazu, die Materialstärke des Zentrierrings annähernd konstant zu halten, um beim Verfestigen des Kunststoffmaterials eine Verformung des Kunststoffmaterials zu vermeiden.

Die Darstellung der Fig. 13 zeigt eine Ansicht des Zentrierrings 42 von vorne, in Fig. 12 also von links. Fig. 14 zeigt eine Schnittansicht entlang der Linie A-A in Fig. 13. Die Schnittebenen verlaufen somit in Fig. 14 durch einen Rastarm 32 mit einer Rastnase 34 und in Fig. 14 unten durch eine der Ausnehmungen 45. Die Fig. 14 enthält darüber hinaus noch zwei vergrößerte Detaildarstellungen, in denen die strichpunktiert eingekreisten Bereiche der Fig. 14 vergrößert dargestellt sind.

Fig. 15 zeigt den Zentrierring 42 der Fig. 12 von hinten, in Fig. 12 also von rechts.

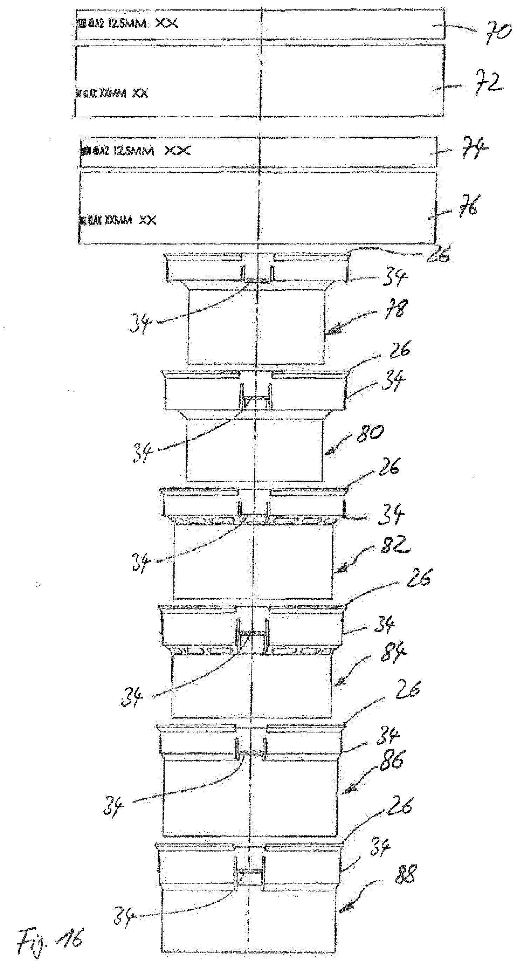

Die Darstellung der Fig. 16 zeigt beispielhaft ein erfindungsgemäßes Spurverbreiterungssystem mit insgesamt vier unterschiedlichen Spurverbreiterungsscheiben 70, 72, 74 und 76. Die Spurverbreiterungsscheiben 70 und 72 unterscheiden sich in ihrer Dicke, wie auch die Spurverbreiterungsscheiben 74 und 76. Die Spurverbreiterungsscheiben 70, 72 weisen gegenüber den Spurverbreiterungsscheiben 74, 76 einen größeren Außendurchmesser auf. Ein Durchmesser einer Mittelöffnung der Spurverbreiterungsscheiben 70, 72, 74, 76 ist dahingegen immer exakt gleich ausgeführt, so dass insgesamt sechs unterschiedliche Zentrierringe 78, 80, 82, 84, 86 und 88 in die Spurverbreiterungsscheiben 70, 72, 74 und 76 eingesetzt werden können. Anhand der Fig. 16 ist auch zu erkennen, dass sich die Zentrierringe 78, 80, 82, 84, 86, 88 im Au-ßendurchmesser ihres Felgenzentrierabschnitts bzw. auch in der axialen Länge ihres Halteabschnitts unterscheiden. Die Rastnasen 34, mit denen die Zentrierringe 78 bis 88 an den Spurverbreiterungsscheiben 70, 72, 74, 76 verrastet werden, sind dahingegen immer im gleichen Abstand von dem in Fig. 16 jeweils oben angeordneten abgeschrägten Bund 26 der Zentrierringe 78 bis 88 angeordnet. Dies ermöglicht die Austauschbarkeit von Spurverbreiterungsscheiben 70 bis 76 und Zentrierringen 78 bis 88.

Die Zentrierringe 78, 80 weisen denselben Durchmesser des Felgenzentrierabschnitts auf und haben deshalb zur Kennzeichnung eine unterschiedliche aber ähnliche Farbe, beispielsweise dunkelrot und hellrot. Die Zentrierringe 82, 84 weisen gegenüber den Zentrierringen 78, 80 einen größeren Durchmesser des Felgenzentrierabschnitts auf, untereinander haben Sie aber denselben Durchmesser des Felgenzentrierabschnitts. Zur Kennzeichnungen sind die Zentrierringe 78, 80 beispielsweise gelb beziehungsweise orange eingefärbt. Die Zentrierringe 86, 88 haben von allen Zentrierringen den größten Durchmesser des Zentrierabschnitts und sind zur Kennzeichnung mit einer unterschiedlichen Farbe versehen, beispielsweise helles weiß beziehungsweise abgedunkeltes weiß. Alle Zentrierringe 78, 80, 82, 84, 86, 88 haben somit eine unterschiedliche Farbe. Zentrierringe mit demselben Durchmesser im Felgenzentrierabschnitt haben aber eine ähnliche Farbe. Ein solches Farbkennzeichnungssystem ist gemäß der Erfindung unabhängig vom Vorsehen von Rastmitteln, also den Rastnasen 34 an den Rastarmen 32, und kann auch an Zentrierringen ohne Rastmittel realisiert werden.

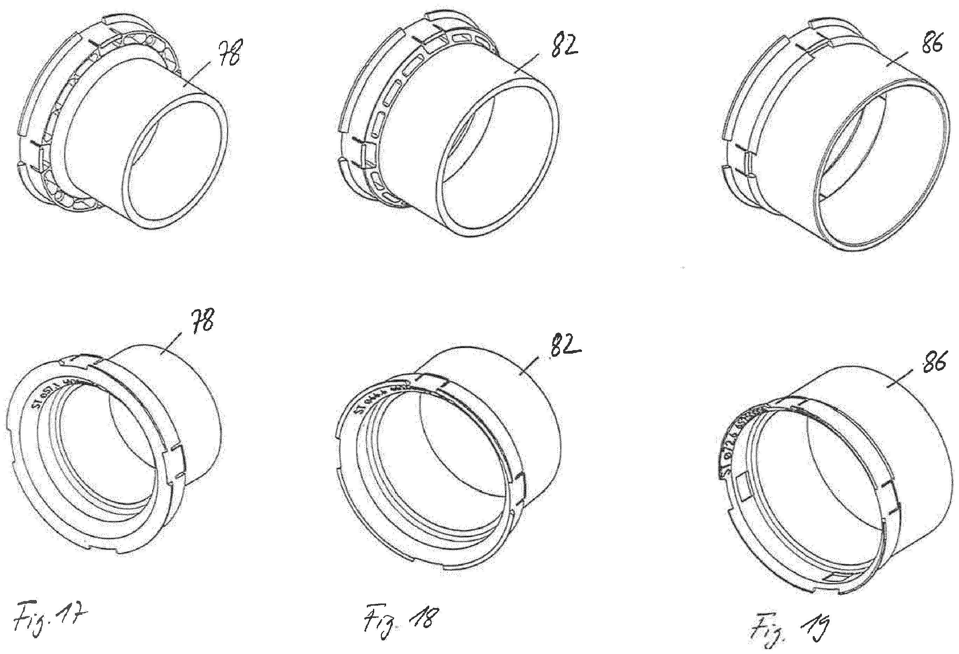

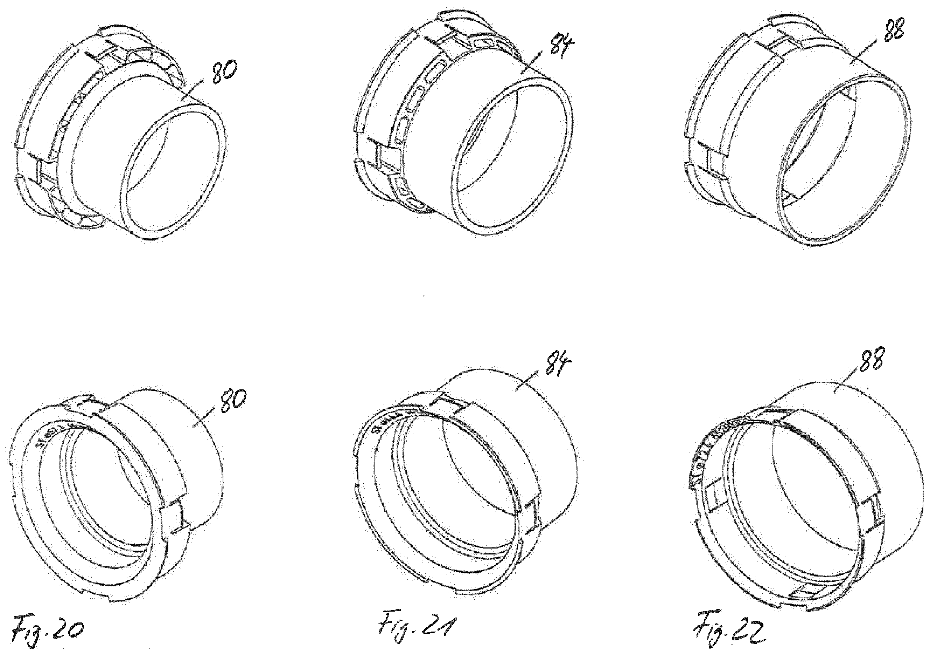

Die Darstellungen der Fig. 17 bis 22 zeigen jeweils zwei Ansichten der Zentrierringe 78 bis 88, oben jeweils von schräg vorne und unten jeweils von schräg hinten.

Fig. 23 zeigt eine schematische Schnittansicht eines erfindungsgemäßen Zentrierrings 12. Fig. 23 ist nicht maßstäblich ausgeführt, sondern die Konizität des Radnabenzentrierabschnitts 41 und des Felgenzentrierabschnitts 40 ist übertrieben dargestellt, um diese Merkmale deutlicher zu zeigen. Abgesehen von dieser speziellen Form des Felgenzentrierabschnitts 40 und des Radnabenzentrierabschnitts 41 weist der Zentrierring 12 der Fig. 23 dieselben Merkmale auf wie die bereits beschriebenen Zentrierringe und diese Merkmale werden daher nicht erneut beschrieben.

Wie bereits im Zusammenhang mit den Fig. 1 und 2 beschrieben wurde, wird der Halteabschnitt 38 des Zentrierrings 12 an einer in Fig. 23 nicht dargestellten Spurverbreiterungsscheibe 10 befestigt. Zusammen mit dem Zentrierring 12 wird die Spurverbreiterungsscheibe 10 dann auf die Radnabe eines Fahrzeugs aufgeschoben. Der Innendurchmesser des Halteabschnitts 38 ist durch den Radnabenzentrierabschnitt 41 gebildet. Die Innenseite des abgeschrägten Bunds 26 hilft dabei, den Zentrierring auf der Radnabe zu zentrieren. Der Radnabenzentrierabschnitt ist leicht konisch ausgebildet, wie dies in Fig. 23 dargestellt ist. Es wird erneut darauf hingewiesen, dass Fig. 23 nicht maßstäblich ist, sondern die Konizität des Radnabenzentrierabschnitts 41 stark übertrieben dargestellt ist. Der Zentrierring 12 wird dann auf den kreiszylindrischen Au-ßendurchmesser der Radnabe aufgeschoben. Der Radnabenzentrierabschnitt 41 weist seinen größten Durchmesser angrenzend an den abgeschrägten Bund 26 auf und verringert dann seinen Durchmesser in einer Richtung weg von dem abgeschrägten Bund 26. Wenn der Zentrierring 12 auf die Radnabe aufgeschoben wird, wird der Zentrierring 12 dadurch automatisch auf der Radnabe zentriert. Speziell werden Toleranzen des Außendurchmessers der Radnabe kompensiert. Indem der Radnabenzentrierabschnitt 41 leicht konisch ausgeführt wird, kann der Zentrierring 12 auf der Radnabe spielfrei angeordnet werden. Dies ist ein erheblicher Vorteil verglichen mit konventionellen Spurverbreiterungssystemen, die kreiszylindrisch ausgebildete Zentrierabschnitte verwenden. Darüber hinaus, da der Zentrierring aus Kunststoff hergestellt ist, macht es die leichte Konizität des Radnabenzentrierabschnitts 41 erheblich leichter, den Zentrierring 12 während des Herstellungsprozesses aus einer Form zu entfernen, beispielsweise einer Spritzgussform. Typischerweise verringert sich der Durchmesser des Radnabenzentrierabschnitts 41 um einige wenige Zehntelmillimeter. Beispielsweise beträgt der Durchmesser des Radnabenzentrierabschnitts 41 an seinem in Fig. 23 oberen Ende 58,3 mm angrenzend an den abgeschrägten Bund 26 und verjüngt sich dann an seinem in Fig. 23 unteren Ende auf 58 mm.

In Fig. 23 ist auch zu sehen, dass der Felgenzentrierabschnitt 40 leicht konisch ausgeführt ist und seinen Durchmesser von oben nach unten in Fig. 23 verringert. Die Konizität des Felgenzentrierabschnitts 40 ist in Fig. 23 stark übertrieben dargestellt. Der größte Durchmesser des Felgenzentrierabschnitts 40 ist somit angrenzend an den Halteabschnitt 38 angeordnet und der kleinste Durchmesser des Felgenzentrierabschnitts 40 ist an dem Ende des Zentrierrings 12 angeordnet, das gegenüber dem Halteabschnitt 38 liegt. Wenn eine Felge auf dem Felgenzentrierabschnitt des Zentrierrings 12 angeordnet wird, können dadurch Toleranzen des Innendurchmessers der Mittelöffnung einer Felge kompensiert werden. Indem der Felgenzentrierabschnitt 40 leicht konisch ausgeführt wird, kann der Zentrierring 12 damit spielfrei in der Mittelöffnung einer Felge angeordnet werden. Zusätzlich erleichtert die leicht konische Ausbildung des Felgenzentrierabschnitts 40 das Entformen des Zentrierrings 12 bei seiner Herstellung. Typischerweise verringert sich der Durchmesser des Felgenzentrierabschnitts 40 nur um wenige Zehntelmillimeter. Wenn beispielsweise der Durchmesser des Felgenzentrierabschnitts 40 58 mm an seinem oberen Ende in Fig. 23, das an den Halteabschnitt 38 angrenzt, beträgt, so verringert sich der Durchmesser bis zu seinem unteren Ende auf 57,5 mm.

## Patentansprüche

1. Spurverbreiterungssystem für Kraftfahrzeuge mit wenigstens einer Spurverbreiterungsscheibe (10) und einem in eine Mittelöffnung der Spurverbreiterungsscheibe (10) eingesetzten Zentrierring (12), wobei der Zentrierring (12) einen Felgenzentrierabschnitt (40, 46, 56) aufweist, der über eine Vorderseite der Spurverbreiterungsscheibe (10) hinausragt und dafür vorgesehen ist, in eine Mittelöffnung einer Felge eingeschoben zu werden, wobei der Zentrierring (12) aus Kunststoff besteht und wenigstens eine, am freien Ende eines federnden Armes (32) angeordnete erste Rasteinrichtung aufweist, wobei die Spurverbreiterungsscheibe (10) eine passende zweite Rasteinrichtung aufweist, wobei die erste Rasteinrichtung als in radialer Richtung nach außen vorragende Rastnase (34) ausgebildet und wobei die zweite Rasteinrichtung mittels eines um die Mittelöffnung umlaufenden Absatzes, einer um die Mittelöffnung umlaufenden Abschrägung oder einer um die Mittelöffnung umlaufenden Nut (36) ausgebildet ist, **dadurch gekennzeichnet, dass** der Felgenzentrierabschnitt (40, 46, 56) des Zentrierrings (12) leicht konisch ausgebildet ist und wobei der Zentrierring (12) als Kunststoffspritzgussteil ausgebildet ist.

2. Spurverbreiterungssystem nach Anspruch 1, wobei der umlaufende Absatz oder die umlaufende Abschrägung am Übergang zwischen der Mittelöffnung und der Oberseite und/oder Unterseite der Spurverbreiterungsscheibe (10) angeordnet ist.

3. Spurverbreiterungssystem nach wenigstens einem der vorstehenden Ansprüche, wobei die Spurverbreiterungsscheibe (10) wenigstens ein sich in Umfangsrichtung erstreckendes, gekrümmtes Langloch als Radschraubenloch (14, 22) aufweist.

4. Spurverbreiterungssystem nach wenigstens einem der vorstehenden Ansprüche, **dadurch gekennzeichnet, dass** die Spurverbreiterungsscheibe (10) mehrere, für das Durchstecken von Radschrauben vorgesehene Radschraubenlöcher (14, 16, 18, 20, 22, 24) aufweist, wobei eine Abmessung der Radschraubenlöcher (14, 16, 18, 20, 22, 24) in radialer Richtung der Spurverbreiterungsscheibe (10) das 1,2fache bis 1,7fache, insbesondere das 1,5fache des Durchmessers der Radschrauben beträgt.

5. Spurverbreiterungssystem nach wenigstens einem der vorstehenden Ansprüche, mit mehreren voneinander verschiedenen Zentrierringen (12, 78, 80, 82, 84, 86, 88), wobei jeder Zentrierring einen Halteabschnitt (38) zum Festlegen an der Spurverbreiterungsscheibe (10) mit wenigstens einer ersten Rasteinrichtung und einen Felgenzentrierabschnitt (40, 46, 56) zum Anordnen in einer Mittelöffnung einer Felge aufweist, wobei alle Zentrierringe denselben Au-ßendurchmesser im Halteabschnitt (38) aufweisen und sich die Zentrierringe wenigstens teilweise im Außendurchmesser des Felgenzentrierabschnitts (40, 46, 56) unterscheiden.

6. Spurverbreiterungssystem nach Anspruch 5, wobei Spurverbreiterungsscheiben (10, 70, 72, 74, 76) unterschiedlicher Dicke vorgesehen sind.

7. Spurverbreiterungssystem nach Anspruch 5 oder 6, wobei Spurverbreiterungsscheiben (10, 70, 72, 74, 76) mit unterschiedlich angeordneten Radschraubenlöchern vorgesehen sind.

8. Spurverbreiterungssystem für Kraftfahrzeuge mit wenigstens einer Spurverbreiterungsscheibe (10) und einem in eine Mittelöffnung der Spurverbreiterungsscheibe (10) eingesetzten Zentrierring (12), wobei der Zentrierring (12) einen Zentrierabschnitt (40) aufweist, der über eine Vorderseite der Spurverbreiterungsscheibe (10) hinausragt und dafür vorgesehen ist, in eine Mittelöffnung einer Felge eingeschoben zu werden und mit mehreren voneinander verschiedenen Zentrierringen (12, 78, 80, 82, 84, 86, 88), wobei jeder Zentrierring einen Halteabschnitt (38) zum Festlegen an der Spurverbreiterungsscheibe (10) einen Felgenzentrierabschnitt (40, 46, 56) zum Anordnen in einer Mittelöffnung einer Felge aufweist, wobei alle Zentrierringe denselben Außendurchmesser im Halteabschnitt (38) aufweisen und sich die Zentrierringe wenigstens teilweise im Außendurchmesser des Felgenzentrierabschnitts (40) unterscheiden, wobei die Zentrierringe aus Kunststoff bestehen und wobei Spurverbreiterungsscheiben (10, 70, 72, 74, 76) unterschiedlicher Dicke vorgesehen sind, wobei jeder der mehreren verschiedenen Zentrierringe (12, 78, 80, 82, 84, 86, 88) in die Mittelöffnung jeder Spurverbreiterungsscheibe (10, 70, 72, 74, 76) einsetzbar ist, **dadurch gekennzeichnet, dass** der Felgenzentrierabschnitt (40, 46, 56) des Zentrierrings (12) leicht konisch ausgebildet ist und der Zentrierring (12) als Kunststoffspritzgussteil ausgebildet ist.

9. Spurverbreiterungssystem nach wenigstens einem der vorstehenden Ansprüche, wobei unterschiedlich ausgebildete Zentrierringe eine unterschiedliche Farbe aufweisen.

10. Spurverbreiterungssystem nach wenigstens einem der vorstehenden Ansprüche, wobei die Zentrierringe aus faserverstärktem Kunststoff gebildet sind.

11. Spurverbreiterungssystem nach wenigstens einem der vorstehenden Ansprüche, wobei ein Radnabenzentrierabschnitt (41) des Zentrierrings (12) leicht konisch ausgebildet ist.

## Claims

1. Track widening system for motor vehicles, having at least one track widening disc (10) and a centering ring (12) which is inserted into a central opening of the track widening disc (10), wherein the centering ring (12) has a rim centering portion (40, 46, 56), which projects over a front side of the track widening disc (10) and which is provided to be inserted into a central opening of a wheel rim, wherein the centering ring (12) is composed of synthetic material and has at least one first catch device which is arranged at the free end of a resilient arm (32), wherein the track widening disc (10) has a corresponding second catch device, wherein the first catch device is in the form of a catch projection (34) which projects outwards in a radial direction, and wherein the second catch device is constructed by means of a peripheral shoulder extending around the central opening, a peripheral chamfered portion extending around the central opening, or a peripheral groove (36) extending around the central opening,
**characterized in that**
the rim centering portion (40, 46, 56) of the centering ring (12) is slightly conical, and wherein the centering ring (12) is an injection-moulded component made of synthetic material.

2. Track widening system according to claim 1, wherein the peripheral shoulder or the peripheral chamfered portion is arranged at the transition between the central opening and the upper side and/or lower side of the track widening disc (10).

3. Track widening system according to at least one of the preceding claims, wherein the track widening disc (10) has at least one curved slot which extends in the peripheral direction as a wheel bolt hole (14, 22).

4. Track widening system according to at least one of the preceding claims, **characterized in that** the track widening disc (10) has a plurality of wheel bolt holes (14, 16, 18, 20, 22, 24) which are provided for the introduction of wheel bolts, wherein a dimension of the wheel bolt holes (14, 16, 18, 20, 22, 24) in a radial direction of the track widening disc (10) is from 1.2 times to 1.7 times, in particular 1.5 times, the diameter of the wheel bolts.

5. Track widening system according to at least one of the preceding claims, having a plurality of mutually different centering rings (12, 78, 80, 82, 84, 86, 88), wherein each centering ring has a retention portion (38) for fixing to the track widening disc (10) with at least a first catch device and a rim centering portion (40, 46, 56) for arrangement in a central opening of a wheel rim, wherein all the centering rings have the same outer diameter in the retention portion (38) and the centering rings differ from each other at least partially in terms of the outer diameter of the rim centering portion (40, 46, 56).

6. Track widening system according to claim 5, wherein track widening discs (10, 70, 72, 74, 76) of different thicknesses are provided.

7. Track widening system according to claim 5 or 6, wherein track widening discs (10, 70, 72, 74, 76) having differently arranged wheel bolt holes are provided.

8. Track widening system for motor vehicles, having at least one track widening disc (10) and a centering ring (12) which is inserted into a central opening of the track widening disc (10), wherein the centering ring (12) has a centering portion (40) which projects over a front side of the track widening disc (10) and which is provided to be inserted into a central opening of a wheel rim and having a plurality of mutually different centering rings (12, 78, 80, 82, 84, 86, 88), wherein each centering ring has a retention portion (38) for fixing to the track widening disc (10) a rim centering portion (40, 46, 56) for arrangement in a central opening of a wheel rim, wherein all the centering rings have the same outer diameter in the retention portion (38) and the centering rings differ from each other at least partially in terms of the outer diameter of the rim centering portion (40), wherein the centering rings are composed of synthetic material, and wherein track widening discs (10, 70, 72, 74, 76) of different thicknesses are provided, wherein each of the plurality of different centering rings (12, 78, 80, 82, 84, 86, 88) can be inserted in the central opening of each track widening disc (10, 70, 72, 74, 76),
**characterized in that**
the rim centering portion (40, 46, 56) of the centering ring (12) is slightly conical, and the centering ring (12) is an injection-moulded component made of synthetic material.

9. Track widening system according to at least one of the preceding claims, wherein different centering rings have a different colour.

10. Track widening system according to at least one of the preceding claims, wherein the centering rings are made of fiber-reinforced synthetic material.

11. Track widening system according to at least one of the preceding claims, wherein a wheel hub centering portion (41) of the centering ring (12) is slightly conical.

## Revendications

1. Système d'élargissement de voie pour véhicules automobiles, muni d'au moins une plaque d'élargissement de voie (10) et d'une bague de centrage (12) introduite dans une ouverture centrale de la plaque d'élargissement de voie (10), la bague de centrage (12) comprenant une section de centrage de jante (40, 46, 56), qui fait saillie au-dessus d'un côté avant de la plaque d'élargissement de voie (10) et qui est prévue pour être insérée dans une ouverture centrale d'une jante, la bague de centrage (12) étant constituée de matière plastique et comprenant au moins un premier appareil d'encliquetage agencé à l'extrémité libre d'un bras élastique (32), la plaque d'élargissement de voie (10) comprenant un deuxième appareil d'encliquetage adapté, le premier appareil d'encliquetage étant configuré sous la forme d'un bec d'encliquetage (34) qui fait saillie vers l'extérieur dans la direction radiale et le deuxième appareil d'encliquetage étant formé au moyen d'un gradin circonférentiel autour de l'ouverture centrale, d'un chanfreinage circonférentiel autour de l'ouverture centrale ou d'une rainure (36) circonférentielle autour de l'ouverture centrale, **caractérisé en ce que** la section de centrage de jante (40, 46, 56) de la bague de centrage (12) est configurée sous forme légèrement conique et la bague de centrage (12) est configurée en tant que pièce moulée par injection en matière plastique.

2. Système d'élargissement de voie selon la revendication 1, dans lequel le gradin circonférentiel ou le chanfreinage circonférentiel est agencé au niveau de la transition entre l'ouverture centrale et le côté supérieur et/ou le côté inférieur de la plaque d'élargissement de voie (10).

3. Système d'élargissement de voie selon au moins l'une quelconque des revendications précédentes, dans lequel la plaque d'élargissement de voie (10) comprend au moins un trou longitudinal courbé, s'étendant dans la direction périphérique, en tant que trou de boulon de roue (14, 22).

4. Système d'élargissement de voie selon au moins l'une quelconque des revendications précédentes, **caractérisé en ce que** la plaque d'élargissement de voie (10) comprend plusieurs trous de boulon de roue (14, 16, 18, 20, 22, 24) prévus pour le passage de boulons de roue, une dimension des trous de boulon de roue (14, 16, 18, 20, 22, 24) dans la direction radiale de la plaque d'élargissement de voie (10) étant de 1,2 fois à 1,7 fois, notamment de 1,5 fois, le diamètre des boulons de roue.

5. Système d'élargissement de voie selon au moins l'une quelconque des revendications précédentes, muni de plusieurs bagues de centrage (12, 78, 80, 82, 84, 86, 88) différentes les unes des autres, chaque bague de centrage comprenant une section de retenue (38) pour la fixation sur la plaque d'élargissement de voie (10) avec au moins un premier appareil d'encliquetage et une section de centrage de jante (40, 46, 56) pour l'agencement dans une ouverture centrale d'une jante, toutes les bagues de centrage présentant le même diamètre extérieur dans la section de retenue (38) et les bagues de centrage différant au moins partiellement au niveau du diamètre extérieur de la section de centrage de jante (40, 46, 56).

6. Système d'élargissement de voie selon la revendication 5, dans lequel des plaques d'élargissement de voie (10, 70, 72, 74, 76) d'épaisseur différente sont prévues.

7. Système d'élargissement de voie selon la revendication 5 ou 6, dans lequel des plaques d'élargissement de voie (10, 70, 72, 74, 76) munies de trous de boulon de roue agencés différemment sont prévues.

8. Système d'élargissement de voie pour véhicules automobiles, muni d'au moins une plaque d'élargissement de voie (10) et d'une bague de centrage (12) introduite dans une ouverture centrale de la plaque d'élargissement de voie (10), la bague de centrage (12) comprenant une section de centrage (40), qui fait saillie au-dessus d'un côté avant de la plaque d'élargissement de voie (10) et qui est prévue pour être insérée dans une ouverture centrale d'une jante, et muni de plusieurs bagues de centrage (12, 78, 80, 82, 84, 86, 88) différentes les unes des autres, chaque bague de centrage comprenant une section de retenue (38) pour la fixation sur la plaque d'élargissement de voie (10), une section de centrage de jante (40, 46, 56) pour l'agencement dans une ouverture centrale d'une jante, toutes les bagues de centrage présentant le même diamètre extérieur dans la section de retenue (38) et les bagues de centrage différant au moins partiellement au niveau du diamètre extérieur de la section de centrage de jante (40), les bagues de centrage étant constituées de matière plastique, et des plaques d'élargissement de voie (10, 70, 72, 74, 76) d'épaisseur différente étant prévues, chacune des plusieurs bagues de centrage différentes (12, 78, 80, 82, 84, 86, 88) étant insérable dans l'ouverture centrale de chaque plaque d'élargissement de voie (10, 70, 72, 74, 76), **caractérisé en ce que** la section de centrage de jante (40, 46, 56) de la bague de centrage (12) est configurée sous forme légèrement conique et la bague de centrage (12) est configurée en tant que pièce moulée par injection en matière plastique.

9. Système d'élargissement de voie selon au moins l'une quelconque des revendications précédentes, dans lequel des bagues de centrage configurées différemment présentent une couleur différente.

10. Système d'élargissement de voie selon au moins l'une quelconque des revendications précédentes, dans lequel les bagues de centrage sont formées en matière plastique renforcée par des fibres.

11. Système d'élargissement de voie selon au moins l'une quelconque des revendications précédentes, dans lequel une section de centrage de moyeu de roue (41) de la bague de centrage (12) est configurée sous forme légèrement conique.
